# EUROPEAN PATENT SPECIFICATION

(11) **EP 3 536 012 B1**
(45) Date of publication and mention of the grant of the patent: **20.12.2023**
(21) Application number: 17867098.0
(22) Date of filing: 30.10.2017
(51) Int. Cl.: H04W 24/02, H04W 36/00, H04B 7/06

(54) **EFFICIENT BEAM MEASUREMENTS**
EFFIZIENTE STRAHLMESSUNGEN
MESURES EFFICACES DE FAISCEAUX

(30) Priority: 04.11.2016 US 201662417727 P
(43) Date of publication of application: 11.09.2019
(73) Proprietor: Nokia Technologies Oy, 02610 Espoo (FI)
(72) Inventor: KOSKELA, Timo, 90120 Oulu (FI); DALSGAARD, Lars, Oulu 90230 (FI); KAIKKONEN, Jorma, 90800 Oulu (FI); HAKOLA, Sami-Jukka, 90450 Kempele (FI)
(74) Representative: Nokia EPO representatives
(86) International application number: PCT/FI2017/050746
(87) International publication number: WO 2018/083377

(56) References cited:
- WO-A1-2016/018121
- WO-A1-2016/172840
- WO-A1-2016/172840
- WO-A2-2011/014014
- US-A1- 2016 150 435
- US-A1- 2016 262 077
- US-A1- 2016 262 077
- US-A1- 2017 208 494
- NOKIA ET AL: "On RRM for NR", 3GPP DRAFT; R4-168376, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Ljubljana, Slovenia; 20161010 - 20161014 19 October 2016 (2016-10-19), XP051164424, Retrieved from the Internet: URL:http://www.3gpp.org/ftp/tsg_ran/WG4_Ra dio/TSGR4_77/Docs/ [retrieved on 2016-10-19]
- Cisco ET AL: "Verizon 5G TF; Network and Signaling Working Group; Verizon 5th Generation Radio Access; Radio Resource Control (RRC); Protocol specification (Release 1)", Cellco Partnership d/b/a Verizon Wireless;, 29 June 2016 (2016-06-29), pages 1-120, XP055319723, Retrieved from the Internet: URL:http://www.5gtf.org/V5G_331_v1p0.pdf [retrieved on 2016-11-15]

## Description

### TECHNOLOGICAL FIELD:

The described invention relates to wireless communications, and more particularly to downlink transmissions of beams which mobile devices measure and report, such as for example in 5G radio access technology (RAT) systems.

### BACKGROUND:

Wireless radio access technologies continue to be improved to handle increased data volumes and larger numbers of subscribers. The 3GPP organization is developing a new radio system (NR, commonly referred to at this time as 5^{th} Generation/5G) to handle peak data rates of the order of ~10Gbps (gigabits per second) while still satisfying ultra-low latency requirements in existence for certain 4G applications. 5G intends to utilize radio spectrum on the order of GHz or more in the millimeter-wave (mmWave) band; and also to support massive MIMO (m-MIMO). M-MIMO systems are characterized by a much larger number of antennas as compared to 4G systems, as well as finer beamforming and a higher antenna gain.

To meet future radio requirements the 3GPP organization seeks to achieve for 5G a single technical framework addressing a wide variety of usage and deployment scenarios. Some of current agreements and open items as to radio resource management (RRM) mobility measurements include e.g.:
- For RRM measurement in NR, at least downlink (DL) measurement is supported with the consideration on both single-beam and multi-beam based operation
- Left for further study is:
   o The definition of RRM measurement for multi-beam based operation;
   o The DL signal for RRM measurement; and
   o When the DL measurement is applied.

This is not to imply any agreement that DL measurement is a complete solution for RRM measurement in NR.

It is known to apply S-measuring to measure a neighbor cell at a general level only when the UE's own cell quality drops below a certain level, to reduce battery consumption as compared to continuous neighbor cell measurements. What is needed in the art are techniques and procedures to reduce power consumption in the UE operating in a higher frequency band radio systems such as for example mmWave systems.

Document WO2016172840A1 discusses neighbor cell measurements.

### SUMMARY

The following summary is merely intended to be exemplary. The summary is not intended to limit the scope of the claims.

According to some aspects, there is provided the subject matter of the independent claims. Some further aspects are defined in the dependent claims.

One or more examples of implementations are set forth in more detail in the accompanying drawings and the description below. The embodiments that do not fall under the scope of the claims are to be interpreted as examples useful for understanding the disclosure. Other features will be apparent from the description and drawings, and from the claims.

### BRIEF DESCRIPTION OF THE DRAWINGS:

FIG. 1 is a schematic diagram showing certain prior art messages a user equipment receives and sends when seeking to establish access to another cell in a cellular radio network.
FIG. 2 is a process flow diagram illustrating a first embodiment of these teachings from the perspective of the UE.
Figure 3 illustrates implementation of a prior art S-measure threshold by which a UE's measurements of neighbor cells depends on a signal level of the UE's serving cell.
Figure 4 is similar to FIG. 3 but showing a further threshold, different from S-measure, by which a UE's type of measurements of neighbor cells depends on a signal level of the UE's serving cell, according to a non-limiting embodiment of these teachings.
FIGs. 5A-B are process flow diagrams summarizing certain aspects of the invention from the respective perspectives of a user equipment and of a radio network operating according to non-limiting embodiments of these teachings.
FIG. 6 is a diagram illustrating some components of a UE/mobile device and also some components of certain entities of a radio network, each of which are suitable for practicing various aspects of the invention.

### DETAILED DESCRIPTION:

Embodiments of these teachings relate to beam measurements and are particularly suitable for new radio systems (5G), but applicable to other radio systems or radio access technologies as well. The embodiments below are in the context of such a 5G radio system but this is only an example radio environment and not a limit to the broader teachings herein. The description below distinguishes between beam-agnostic and beam-specific signaling and measurements.

Beam-agnostic signaling is identical regardless of the beam or set of beams on which it is sent. For example, if a cell broadcasts system information across multiple beams, each beam will be carrying identical system information (same signal is fed to all the beams in a set, which is sometimes called "superposition" transmission. The UE taking a measurement of, for example, a synchronization signal it detects on beam-1 versus the same synchronization signal it detects on beam-2 will be taking beam-agnostic measurements because while the values of these two measurements may be different the signal being measured, a synchronization signal in this example, is identical regardless of what beam it is sent on. Note that for this example, in practice the UE would likely see a 'superposition' beam wider than beam-1 or beam-2 and thus one `synch' beam. The UE can receive and potentially this synchronization signal without knowing anything about the beam configuration in the cell or the actual beams that the information was sent from. In other words if a signal is transmitted in beam agnostic manner using e.g. two beams, same signal is transmitted on both beams and from UE perspective is sees the transmission as a single beam transmission (this single beam pattern is a combined pattern of the two beams) Beam specific signaling is the opposite; it is signaled on one beam at any given time and to receive it the UE must know the beam configuration in the cell. If beam grouping is deployed some subset of all the beams in a cell may be grouped in a manner known to both the network and possibly the UE, in which case the beam specific signaling is specific to only the beam group. So for example a beam reference signal (BRS) is beam specific signaling because at any given time one particular BRS is associated with one beam in a cell and the UE needs to know the beam configuration in the cell in order to find the BRS. Or if the UE does not know the beam configuration the UE can blindly detect a BRS of a neighbor cell for example using some assistance information from the network, such as the maximum number of BRS ports in the neighbor cell which enables the UE to know how many there are in parallel and how many time resources there are for BRS transmission. The UE taking a measurement of a BRS it detects will be taking a beam-specific measurement. Random access channel resources are generally specific per beam and the UE needs the cell's beam configuration before transmitting on the random access channel (RACH) so the RACH is beam-specific signaling, and other signaling within the RACH procedure will also be beam-specific. While different specific radio access technologies (RATs) may differ, within any given RAT it will be readily understood which signaling is beam-agnostic and which is beam-specific, and the distinction will be grounded in whether or not the UE needs to know the cell's beam configuration in order to receive that signaling.

For measurement and mobility purposes, it is important to have the UE perform the correct measurements at the right time, while also ensuring that the UE is not performing unnecessary measurements when such measurements are not needed which would obviously be a wasteful of the UE's limited power supply.

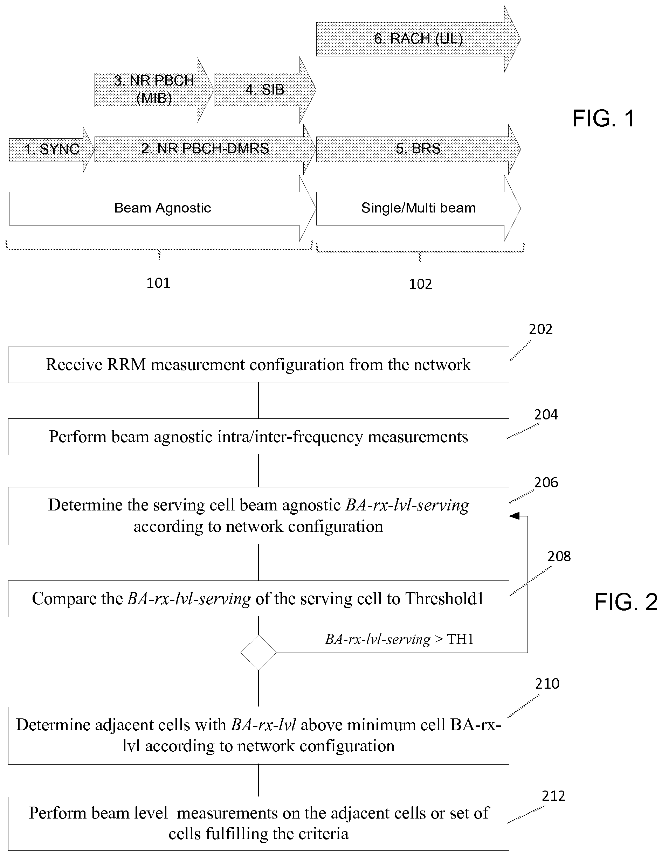

FIG. 1 is a schematic diagram showing certain prior art messages a user equipment receives and sends when seeking to establish access to another cell in a cellular radio network, particularly a 5G radio network as currently developed, and may be a useful context for a clear understanding of these teachings. While the specific messages shown at FIG. 1 may be known, what is not shown is grouping them into beam-agnostic 101 versus beam-specific 102 signaling.

Message 1 is a synchronization signal (SYNC) that indicates a presence of a cell and encodes an identity (for example, a cell identity including the primary and secondary synchronization signals PSS and SSS). The SYNC signal may also be composed of additional synchronization signals (similar to SSS) serving various purposes such as extending cell ID space or providing symbol timing information or merely a repeated SSS to provide larger bandwidth for measurement purposes. This or these additional signals may be called Extended Synchronization Signal (ESS), or Tertiary Synchronization Signal (TSS) just to name few examples. From a measurement perspective the performed measurement may be performed in any combination of these signals. Message 2 is the 5G physical broadcast channel demodulation reference signal (PBCH DM-RS). These PBCH-DMRS signals are determined by the UE based on the physical cell identity (PCI or sometimes abbreviated PCID) which the UE uses to decode the cell specific PBCH. Message 3 is the cell's PBCH which carries the master information block (MIB). The MIB carries minimum but essential system information for further cell access and also carries information the UE uses to determine how to decode further system information from the cell such as the system information block (SIB). The MIB may also carry beam configuration information such as number of BRS ports in current sweep block, sweep block ID and the periodicity of the sweep. The SIB carries further system information beyond the MIB about how to access the cell and also enables the UE to determine whether it is allowed to access this particular cell (for example, the cell may serve only a closed subscriber group). The SIB may be provisioned either by additional downlink sweep (for example, sweeping subframes in 5G where narrow beams sweep different geographic portions of the cell) or it may be scheduled on a shared channel. All of these messages 1 through 4 may be considered beam agnostic signaling 101 as FIG. 1 illustrates.

FIG. 1 further shows message 5 which are the beam reference signals (BRSs). Based on the beam configuration information the UE receives in system information, the UE is able to determine the operation mode of the cell, for example, whether it is operating as a single/wide beam or with multiple narrow beams. This beam configuration information carries other configuration information such as identifying to the UE what are the random access resources. Once the UE has obtained this information on the cell beam configuration such as number of BRS ports and the discovery signal periodicity, it is able detect different beams of the cell. Message 6 is a random access channel (RACH) message which is the only uplink message in FIG. 1. The UE transmits on the RACH to begin a random access procedure to access the cell on radio resources that are configured for/allocated to the UE during the RACH procedure. Messages 5 and 6 (including the entire RACH procedure) may be considered beam specific signaling 102.

It may be that in some RATs the SIB at message 4 is beam specific. In this case, the MIB would carry the cell's beam configuration information in order for the UE to be able to detect the beam-specific SIB. In that regard FIG. 1 is merely a non-limiting example of what signaling may be considered beam-agnostic versus beam-specific.

Ideally from the UE's perspective the reception of messages 1 through 4 of FIG. 1 (SYNC, PBCH-DM-RS, PBCH-MIB and possibly SIB) would be beam agnostic 101 because the UE would not need to know anything about the cell's beam configuration before it has decided to access the cell using the random access procedure. Such beam configuration may for example include the number of BRS ports (also in some cases number of BRS ports in specific sweep blocks) and discovery signal periods, among other information. This approach would allow a similar cell search and initial access procedure among all the UEs in a cell, until a given UE decides to access the cell.

From FIG. 1 the most logical downlink signaling for the UE to measure for mobility purposes are message 1 (SYNC), message 2 (DM-RS) and message 5 (BRS). Referring to these as messages is not to imply there must be more than only the signals themselves; for example message 1 may be only the PSS+SSS and messages 2 and may be only the respective reference signals. But due to beamforming it may be that the UE needs to have some measurement gaps for intra-frequency measurements since in some cases the neighbor cell which the UE is to measure for mobility purposes is an intra-frequency cell as compared to the UE's current serving cell. In some cases measurement gaps are also needed for intra-cell measurements due to limited UE capability. The UE will need to perform its cell measurements, both of its own current serving cell and the neighbor cells, quickly and efficiently to reduce mobility latencies. This means avoiding decoding neighbor cell system information as part of the mobility measurements and/or prior to mobility. When the UE is performing measurements in order to enable preparations for mobility - e.g. a handover, it should of course get the neighbor/target cell (system) information including necessary information related to the beam structure used in the cell. This enables the UE to perform beam level measurements of neighbour cells, but when taking mobility measurements, which are taken more continuously and also prior to the handover decision, and are often the basis for a given handover decision, the UE may not always need such detailed information about a neighbor cell which may or may be decided as a handover target cell. And as mentioned above, for measurement and mobility purposes it is important to have the UE perform the correct measurements at the correct time while it is also important to ensure that the UE is not performing unnecessary/not needed measurements.

The background section mentions that the MeasConfig message uses the S-measure parameter, and TS V5G.331 v 1.0 (2016-06) at section 5.4.3.1 defines how it is used as follows:
For all measurements, the UE receives BRS and measures RSRP for each beam pair. Furthermore, the UE applies the layer 3 filtering as specified in 5.4.3.2, before using the measured results for evaluation of reporting criteria or for measurement reporting.
The UE shall:
1> for each measId included in the measIdList within VarMeasConfig:
2> if s-Measure is not configured; or
   2> if s-Measure is configured and the PCell RSRP, after layer 3 filtering, is lower than this value;
3> 3> perform the corresponding measurements of neighbouring cells on the frequencies indicated in the concerned measObject as follows: 2> perform the evaluation of reporting criteria as specified in 5.4.4; NOTE 3: The s-Measure defines when the UE is required to perform measurements.

Further, section 6.2.2 of that same document defines S-measure thusly:
Serving cell quality threshold controlling whether or not the UE is required to perform measurements of intra-frequency. Value "0" indicates to disable s-Measure.

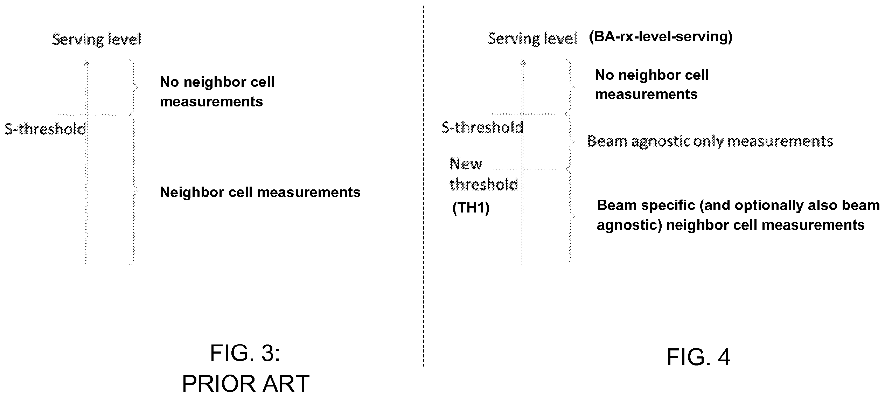

FIG. 3 is a prior art illustration of how the S-measure parameter operates when configured with a non-zero value for a UE. In that diagram, 'serving level' indicates the RSRP of the UE's current serving cell which increases in the direction of the arrow. If the UE's RSRP measurement of its serving cell is less than the configured value for S-measure the UE is to perform intra-frequency neighbor cell(s) measurement, with or without use of measurement gaps, else if the UE's RSRP measurement of its serving cell is greater than the configured value for S-measure the UE is not required to measure its intra-frequency neighbor cell(s).

Some embodiments of these teachings employ a signal level threshold TH1 that is in some embodiments configured by the network for a given UE. In a first embodiment the UE compares its measured signal strength of its current serving cell against this new threshold TH1. As FIG. 4 illustrates, this new threshold TH1 may be in addition to and used in conjunction with the parameter S-measure for a given UE but such a deployment is only a non-limiting embodiment. In one embodiment the TH1 threshold is used for deciding whether to perform beam agnostic measurements of the neighbor cell or beam specific measurements of the neighbor cell. In yet one embodiment, the TH1 may be a limit for determining whether to perform neighbor cell measurements at all or whether to switch from no-measurements to beam-specific measurements of the neighbor cell. In the following it is for simplicity considered that the TH1 is a threshold for deciding whether to perform beam specific measurements or beam agnostic measurements of the neighbor cell, or of a set of neighbor cells.

The UE's comparison of the signal strength (or more generally channel conditions) of its current serving cell against this new threshold TH1 in this first embodiment may be considered as determining whether or not the UE is experiencing/operating under good channel conditions in its current serving cell. If yes then the UE would only perform beam agnostic neighbor cell measurements. On the contrary, when the UE is operating under worse channel conditions than defined by the value of the new threshold TH1 (which typically would occur near a cell edge) then the UE would perform neighbor cell beam level measurements and synchronization.

For the case in which both thresholds TH1 and S-measure are configured for a given UE then these beam agnostic neighbor cell measurements could be performed only when the UE's measurement of its serving cell is greater than the new threshold TH1 and less than S-measure threshold. This could imply that whenever both are configured for a given UE the new threshold TH1 should be less than the value for S-measure, but some embodiments may not impose this restriction. Note that in FIG. 4 the UE's measurement (BA-rx-level-serving) of its serving cell is itself a beam-agnostic measurement. However, in an embodiment, the serving cell's channel condition is measured based on beam-specific measurements of the serving cell. For simplicity it is considered in the following that the UE's measurement (BA-rx-level-serving) of its serving cell is a beam-agnostic measurement. Consistent with the way that S-measure is currently utilized, if the UE's measurement (BA-rx-level-serving) of its serving cell is greater than the configured value for the parameter S-measure the UE is not required to measure its neighbor cell(s) as FIG. 4 further illustrates.

The channel condition may be determined by measuring the signal quality based on reference signals. One non-limiting embodiment comprises measuring reference signal received power (RSRP) to determine the channel condition. Respecting the beam-agnostic measurements, in one particular implementation the UE evaluates the cell BA-rx-level based on the level of the synchronization signal (SYNC-rx-level, or SYNC-RP, Synchronization Signal Received Power), the PBCH-DM-RS, a combination of the SYNC signal and the PBCH-DM-RS, or any other signal which can be received in a beam agnostic manner such that the UE does not measure the individual beam levels of a cell. As a non-limiting example, the UE can determine the *BA-rx-level* based on the sweep block specific measurements, for example:
o the highest detected *BA-rx-level* measured during the sweeping duration (may have duration of multiple subframes),
o the BA-rx-level of the sweep block of the current serving beam of the serving cell, or
o an average BA-rx-level taken over some pre-defined integer number N of the best sweep blocks.

In 5G (or in NR, New Radio in 3GPP study item) the gNB (NR term for base station or Node B) may able to cover only part of the cell area by using a subset of beams at any given time. This is called beam sweeping. The gNB needs to sweep through the cell coverage area in the time domain by activating different set of beams at any given time. A so-called sweeping subframe is used to provide coverage for common control channel signaling periodically with beam forming (this includes the SYNC signal and potentially other beam agnostic and beam specific signals). A sweeping subframe consists of sweeping blocks (SBs) where a single block covers a specific area of the cell with a set of active beams. Depending on the number of active beams per sweep block and the total number of beams required to cover a cell area, multiple sweep blocks may be needed.

In this first embodiment if the measured serving cell level is worse than the new threshold TH1, the UE is required to perform beam measurements/tracking on neighbor cells, and when the measured serving cell level is better than TH1 the UE continues to perform beam agnostic intra/inter-frequency measurements of its neighbor cell(s) and would not need to perform beam measurements/tracking on neighbor cells. In one particular implementation these beam-specific measurements could be limited, for example so that the UE is required to take beam-specific measurements of only the strongest cell or the strongest set of cells (such as the two or three strongest neighbor cells).

A second embodiment has the UE taking the same actions as a result of assessing the channel conditions it is currently experiencing but in this embodiment the UE compares the neighbor cell signal level to its serving cell signal level. These signal levels may be beam agnostic signal levels. Consequently, in this embodiment, the UE will perform beam level measurements of one or more neighbor cells that has a higher signal level (in general better channel conditions) than that of the serving cell. In one variation of this second embodiment the network may provide or the implementing radio specifications may set forth a pre-defined minimum difference in these signal levels, so that the UE will perform beam level measurements of each neighbor cell that has a signal level exceeding that of the serving cell by at least the pre-defined minimum difference. Such minimum difference can be either a positive or negative difference/offset value. In addition to the minimum difference an additional parameter (hysteresis) may be signaled to avoid UE to switch back and forth between beam agnostic measurements and beam specific measurements in case of relatively minor fluctuations of the signal level or levels. For example, once the UE has determined to perform beam specific measurements and the signal levels are inside the range of hysteresis, the UE may continue to perform such measurements.

The first and second embodiments above may be employed together such that the UE will perform beam level measurements of the relevant neighbor cell(s) whenever either of the definitions of `good channel conditions' is not satisfied; signal level of its serving cell less than TH1 or signal level of the neighbor cell better than that of its serving cell. Alternatively, both may be employed together to make the beam-level measurements more restrictive so the UE will perform beam level measurements of the relevant neighbor cell(s) only when both of the above definitions of `good channel conditions' are not satisfied.

It may be that the UE is not able to measure an adjacent/neighbor cell due to a lack of reference signals such as periodic mobility reference signals available to measure from it. In such a case, another embodiment of these teachings has the network scheduling such neighbor cell to transmit UE or UE group -specific (inter-cell) reference signals for example mobility reference signals (MRS), CSI-RS (Channel State Information Reference Signal) or the like. In this case the 'network' can simply be the serving cell and the neighbor cell in that the serving cell can instruct the neighbor cell to schedule such transmissions. The serving cell can know of the need to do so from the PCI, possibly along with the signal level (BA-rx-level), that the UE reports to it in its neighbor cell reports.

Through the parameter S-measure the UE's own cell's signal strength can play a role in deciding whether or not to measure the neighbor signal at all, but an aspect of these teachings is that the new threshold TH1 has the UE's own cell's signal strength affecting whether to move into more detailed, beam level, measurements of the neighbor cell. One particular advantage of this technique is to allow the UE to measure the neighbor cell at a more detailed level only at certain conditions, thus reducing battery consumption at the UE. At other times the UE may measure the neighbor cell at a coarse level (beam-agnostic measurements only).

In that regard embodiments of these teachings may be considered as a two-step approach for mobility measurements in a beam based radio network deployment which enables more efficient UE measurements when the UE's channel conditions with its serving cell are good:
- When the UE is e.g. operating under good channel conditions in serving cell the UE would only perform beam agnostic neighbor cell measurements, or no measurements at all.
- When the UE is operating under poor channel conditions such as are often encountered at the cell edge, the UE would perform neighbor cell beam level measurements and synchronization.

FIG. 2 is a more detailed flow diagram of a process according to the first embodiment summarized above. The neighbor cells may include both intra-frequency and inter-frequency neighbors to the UE's serving cell. It is assumed that the UE would continuously perform intra-frequency measurements, and perform inter-frequency measurements during defined measurement gaps. In some cases the intra-frequency measurements may need gaps.

Initially at block 202 the UE receives from the network its radio resource management (RRM) configuration which may include e.g. the value for the new threshold TH1, the offset value, possibly physical identities (PCIs) of neighbor cells and a minimum neighbor-cell signal level, among other information (for example, neighbor cell frequencies and the timing of the UE's measurement gaps for the inter-frequency case). In the normal course of operation at block 204 the UE performs beam agnostic intra- and/or inter-frequency measurements (as the case may be) to detect any adjacent cells for example that were identified to it in the RRM measurement configuration (if such a cell list is provided) and it measures the beam agnostic reception level (*BA-rx-lvl)* of any such detected neighbor cell. The UE may detect such neighbor cells by a predefined cell detection procedure and reading their respective PCI which they will broadcast, for example. Then at block 206 the UE measures the beam agnostic reception level of the serving cell (shown in FIG. 4 as BA-rx-lvl-serving) according to the network configuration it received at block 202.

Now having the serving cell beam-agnostic measurement and the value of the new threshold TH1, at block 208 the UE compares the measured BA-rx-level-serving to that pre-defined threshold value TH1. If the measured BA-rx-level-serving is better than the threshold TH1, the UE is not required to perform beam measurements/tracking on neighbour cells and the FIG. 4 process flows from the output of block 208 back to block 206 for another measurement and comparison. Note that in this case the UE is still performing beam agnostic intra/inter - frequency measurements at block 204 to continue to detect adjacent cells and measure their respective BA-rx-levels; progression from block 204 to 206 does not imply the measuring at block 204 terminates.

If instead the comparing at block 208 shows that the measured *BA-rx-lvl-serving* is worse/lower than the threshold TH1, the UE is required to perform beam measurements/tracking on one or more neighbour cells per block 212 where the UE detects and measures the BRS of its neighbouring cells. As mentioned above these beam measurements could be limited to only the strongest one or a few neighbor cells.

Block 210 continues the adjacent cell detection and measurement as described for block 204, with the further detail that the respective *BA-rx-levels* that the UE measures of the neighbor cells are compared to the network-configured minimum neighbor-cell signal level. To avoid the UE taking beam-level measurements of cells that would not be viable targets for handover, block 210 filters out those whose signal level are below some pre-defined minimum which in this embodiment the UE learns from its RRM measurement configuration at block 202. Only those neighbor cells that satisfy the check at block 210 are subject to the UE's more power-consuming beam-level measurements at block 212.

The second embodiment summarized above has the UE comparing the BA-rx-level of the adjacent cell to the BA-rx-level of the serving cell *(BA-rx-lvl-serving*)*,* so in this embodiment the comparison at block 208 of FIG. 2 would be between the measurements taken at blocks 204 and 206. Some embodiments may use an offset in this comparison to avoid a ping-pong effect when the measurements themselves are close, so for example the decision criteria for the comparison may be that for each cell that fulfils the criteria: *BA-rx-lvl > BA-rx-lvl-serving*+*offset* the UE performs beam level measurements. Beam level measurements could be based on BRS signals.

Some problems may arise in a practical system; for example the UE may not be aware of the beam specific information that would enable the UE to perform the neighbour cells beam measurements. As mentioned above, if this occurs the network could provide such information/configuration to the UE when needed, so that once the UE has detected that the criteria for performing beam measurement on a given neighbour is fulfilled, the UE reports this to the network. Such report could indicate to the network the reason for the report and identify the one or more cells in question. For example, the UE would report the *BA-rx-lvl* measurements for example that satisfy block 210 of FIG. 2 or that satisfy some other configured measurement event. Or alternatively, which can also be used in the case the network does not have and/or provide to the UE the necessary neighbour cell information, the UE can decode the cell level information itself, for example from the neighbor cell's broadcast MIB and/or SIB.

Embodiments of these teachings can be deployed for intra and/or inter- cell measurements. In inter-cell option, the UE decides whether or not to measure the one or more neighboring cells beam specifically. In intra-cell case the UE decides whether or not to measure one or more sweep blocks of the current serving cell beam specifically. In one example the network may configure different threshold values for inter-cell measurements and for intra-cell measurements, for example values for TH1-inter-cell and TH1-intra-cell, to separate these from the inter-cell inter-frequency or inter-cell intra-frequency thresholds. The intra-cell measurements BA-rx-lvl may in this embodiment be performed at the sweep block of the current serving beam, i.e. a current serving sweep block, (a sweep block consists of a set of beams, but can also be one beam), so that for each sweep block that are above (for example, where BA-rx-level-sweep-block > BA-rx-level-current-sweep-block+offset) the UE can report the BRS measurements. Note that in this case the offset may be a positive or a negative value. Sweep-blocks are radio resources in which the different transmission-reception points of a given cell sweep their narrow beams such that all geographic regions of the cell are covered at least one time during a sweeping period. At this point in the development of 5G, sweep blocks and sweeping subframes are understood by those skilled in the 5G arts. In one embodiment, the network may schedule intra-cell mobility reference signals and/or channel state information reference signals (CSI-RS) based on the sweep block rx-lvl measurement reports. These signals are beam specific signals. The serving cell may schedule these based on the beam agnostic measurements and reporting in the serving cell.

In any of the above examples, if there are no periodic mobility reference signals (such the mentioned BRSs) available in the adjacent cell, the serving cell can instruct the adjacent cell to schedule UE-specific (inter-cell) references signals such as mobility reference signals (MRS) based for example on the PCI and possibly the BA-rx-levels of the adjacent cells that the UE reports to its serving cell. The PCI may be used to identify the neighbour cell and BA-rx-levels are used for example to evaluate the measured signal level on the UE side. The network may also (optionally) configure the UE to report also the identity of the sweep block that yielded the highest BA-rx-level, to aid the network's scheduling of the mobility reference signals. As the sweep block consist of specific set of beams, the serving cell may schedule the reference signals based on the reported sweep block ID.

Certain embodiments of these teachings provide the technical effect of enabling a quick way for the UE to determine if beam level measurements are needed, without the UE needing to decode the beam configuration of neighbor cells. Such embodiments also provide the technical effect of limiting beam level measurements and reporting on BRS (and/or MRS as detailed above) for cells that are not potential candidates for handover, and this extends to both intra-frequency neighbor cells and inter-frequency neighbor cells. Further, the techniques herein can be applied for UEs in a connected mode as well as those in an IDLE or INACTIVE mode so long as they are configured for such measurements by the network.

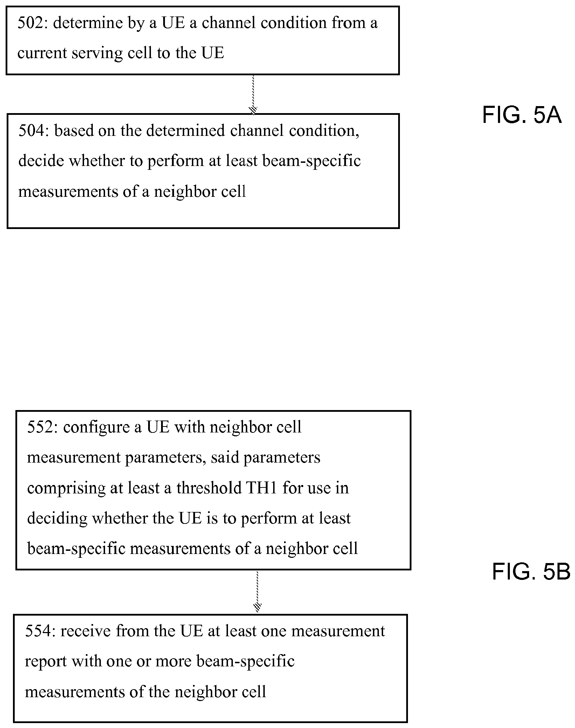

FIG. 5A is a flow diagram of a particular embodiment of these teachings from the perspective of the UE. At block 502 the UE determines a channel condition from a current serving cell to the UE. Above there were described two embodiments of this; comparing the RSRP to the threshold TH1 versus comparing the RSRPs of the serving and the neighbor cells to one another (possibly with an offset). Then at block 504, based on that determined channel condition the UE decides whether to perform at least beam-specific measurements of the neighbor cell.

In certain radio access technologies there may be one or more than one serving cell. These teachings are fully consistent with a radio environment in which a given UE has more than one serving cell. For the specific case of an intra-cell threshold, it may be that the UE is measuring different sweep blocks of the same serving cell. So for example if the UE's measurement of its serving cell's channel conditions are worse than the intra-cell threshold the UE will then perform beam-specific measurements during the sweep blocks of that same serving cell. This may be in addition to inter-cell measuring which may use a different inter-cell threshold with a different value. Further, the inter-cell case may itself have two different thresholds, an intra-frequency threshold and an inter-frequency threshold.

In one specific embodiment the deciding at block 504 comprises choosing between a) performing beam-agnostic measurements of the neighbor cell and b) performing the at least beam-specific measurements of the neighbor cell. FIG. 4 shows this aspect. In more particular implementations, a1) the beam-agnostic measurements are performed when the determined channel condition is better than a predetermined threshold such as the new threshold TH1; and b1) the beam-specific measurements are performed when the determined channel condition is worse than the predetermined threshold.

In some embodiments the deciding of block 504 comprises one of two choices: a) upon detecting that the channel condition from the current serving cell is below a predetermined threshold, performing the at least beam-specific measurements of the neighbor cell; and b) not performing any beam-specific measurements of the neighbor cell.

In various embodiments FIG. 5A can be adapted for both inter- and intra-frequency/cell neighbor cell cases such that the UE receives from the current serving cell at least one of an intra-frequency threshold and an inter-frequency threshold; and then the determining at block 502 comprises for a given neighbor cell: a) comparing the channel condition (such as the received signal level) of the current serving cell against the intra-frequency threshold for the case the neighbor cell is an intra-frequency neighbor cell; and/or b) comparing the channel condition of the current serving cell against the inter- threshold if the neighbor cell is an inter-frequency neighbor cell.

In some embodiments the deciding at block 504 includes: upon detecting that the channel condition from the serving cell is below a channel condition from the neighboring cell, performing the beam-specific measurements of the neighbor cell; else b) not performing the at least beam-specific measurements of the neighbor cell.

In some embodiments the UE requests from the current serving cell configuration information, beyond that of block 502, that enables the UE to perform the beam-specific measurements. Then the UE may receive that requested configuration information from the network. In some embodiments this request may be a measurement report sent by the UE, or some other report or indication. In some embodiment, the configuration is sent by the network without request and in some embodiments the UE may derive the required configuration itself.

In some embodiments the UE will perform the beam-specific measurements on only a subset of all its neighbor cells based on the respective signal strength of those neighbor cells. And in some embodiments the UE will perform the beam-agnostic measurements during a sweep block of the current serving cell.

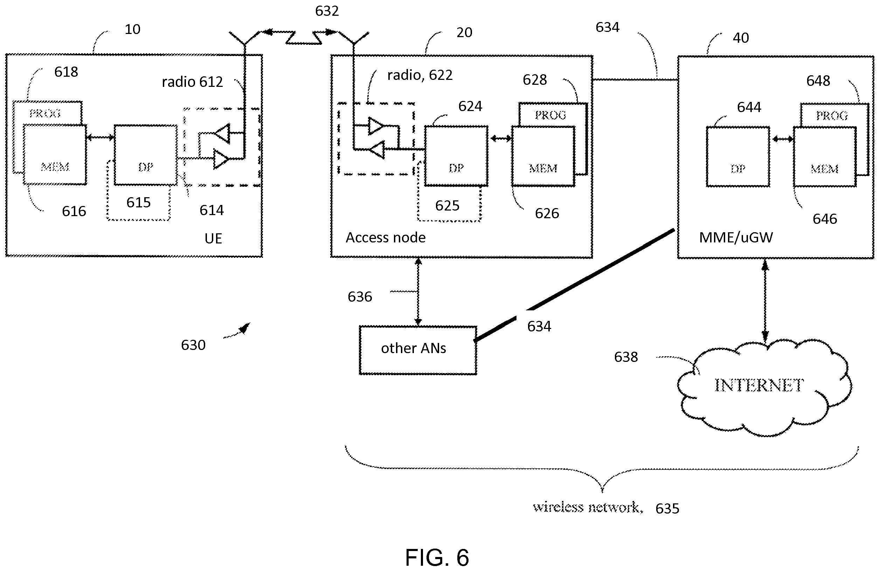

Certain embodiments of these teachings may be made manifest in an apparatus comprising at least one processor and at least one memory tangibly storing a computer program; wherein the at least one processor is configured with the at least one memory and the computer program, as detailed below for FIG. 6 as the UE 10 or certain components thereof, to cause the apparatus to perform the process shown at FIG. 5A, possibly also as more particularly detailed immediately above. Such embodiments can also be made manifest in a computer readable memory tangibly storing a computer program that when executed causes a host UE to perform the process shown at FIG. 5A, also possibly as more particularly detailed immediately above.

Further as to embodiments from the UE perspective, other such embodiments may be implemented as an apparatus comprising suitable means, such as determining means and deciding means. In this case the determining means is for determining a channel condition from a current serving cell; and the deciding means is for choosing whether to perform at least beam-specific measurements of the neighbor cell based on the determined channel condition. With reference to the UE 10 of FIG. 6, the determining means may comprise at least one radio receiver and comparing circuitry; and the deciding means may comprise at least one processor and at least one memory tangibly storing a computer program. The comparing circuitry may for example be disposed within the digital processor or the dedicated processor shown at FIG. 6.

FIG. 5B is a flow diagram from the perspective of the network, more specifically from the perspective of the radio access node such as a base station, eNB, transmit-receive point or other type of access point through which a UE gets access to a radio network. In this regard the radio access node at block 552 configures a UE with neighbor cell measurement parameters for use by the UE in deciding whether the UE is to perform at least beam-specific measurements of a neighbor cell. The UE performs its processes as set forth above and eventually will send a neighbor cell measurement report to its serving network node, which at block 554 receives from the UE at least one measurement report with one or more beam-specific measurements of the neighbor cell. These measurements are done according to the configuration sent at block 552. Further more specific embodiments follow those summarized above for the UE's perspective, but in this case from the perspective of the radio access node. In an embodiment, the parameters may comprise one or more thresholds (e.g. inter-cell threshold, inter-cell inter-frequency threshold, inter-cell intra-frequency threshold, and/or intra-cell threshold). In the description, a term TH1 has been used. TH1 may be any one of these thresholds, depending on the applied use case. In one embodiment, the parameters may comprise the offset value which may be used when comparing the own cell quality to the neighbour cell quality.

Certain embodiments of these teachings may be made manifest in an apparatus comprising at least one processor and at least one memory tangibly storing a computer program; wherein the at least one processor is configured with the at least one memory and the computer program, as detailed below for FIG. 6 as the access node 20 or certain components thereof, to cause the apparatus to perform the process shown at FIG. 5B, possibly also as more particularly detailed immediately above from that node's perspective. Such embodiments can also be made manifest in a computer readable memory tangibly storing a computer program that when executed causes a host access node 20 to perform the process shown at FIG. 5B, also possibly as more particularly detailed immediately above from that perspective.

Further as to embodiments from the access node's perspective, other such embodiments may be implemented as an apparatus comprising suitable means, such as configuring means for performing the actions at block 552, and receiving means for performing the actions at block 554. Such an apparatus may embody a radio network access node or components thereof, where as shown at Fig. 6 below the configuring means comprises at least one processor and at least one memory tangibly storing a computer program and a radio transmitter, and the receiving means comprises at least one radio receiver.

FIG. 5A can be considered as an algorithm, and more generally represents steps of a method, and/or certain code segments of software stored on a computer readable memory or memory device that embody the FIG. 5A algorithm for implementing these teachings from the perspective of the UE. Similarly, FIG. 5B can be considered as an algorithm, steps of a method, and/or code segments of software stored on a computer readable memory or memory device that embody the FIG. 5B algorithm for implementing these teachings from the perspective of a base station/radio access node/transmit-receive point of a radio network. In this regard the invention may be embodied as a non-transitory program storage device readable by a machine such as for example one or more processors of a UE or radio network access node, where the storage device tangibly embodies a program of instructions executable by the machine for performing operations such as those shown at FIG. 5A or 5B and detailed above.

FIG 6 is a high level diagram illustrating some relevant components of various communication entities that may implement various portions of these teachings, including a base station identified generally as a radio network access node 20, a mobility management entity (MME) which may also be co-located with a user-plane gateway (uGW) 40, and a user equipment (UE) 10. In the wireless system 630 of FIG. 6 a communications network 635 is adapted for communication over a wireless link 632 with an apparatus, such as a mobile communication device which may be referred to as a UE 10, via a radio network access node 20. The network 635 may include a MME/Serving-GW 40 that provides connectivity with other and/or broader networks such as a publicly switched telephone network and/or a data communications network (e.g., the internet 638). As noted above, where the transmission reception points (TRPs) are coordinated by some further network entity for operating according to these teachings such a coordinating network entity may be in the position of that MME/uGW 40. In other embodiments it may be one of the TRPs themselves that takes on that coordinating function.

The UE 10 includes a controller, such as a computer or a data processor (DP) 614 (or multiple ones of them), a computer-readable memory medium embodied as a memory (MEM) 616 (or more generally a non-transitory program storage device) that stores a program of computer instructions (PROG) 618, and a suitable wireless interface, such as radio frequency (RF) transceiver or more generically a radio 612, for bidirectional wireless communications with the radio network access node 20 via one or more antennas. In general terms the UE 10 can be considered a machine that reads the MEM/non-transitory program storage device and that executes the computer program code or executable program of instructions stored thereon. While each entity of FIG. 6 is shown as having one MEM, in practice each may have multiple discrete memory devices and the relevant algorithm(s) and executable instructions/program code may be stored on one or across several such memories.

In general, the various embodiments of the UE 10 can include, but are not limited to, mobile user equipments or devices, cellular telephones, smartphones, wireless terminals, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The radio network access node 20 of Fig. 6 also includes a controller, such as a computer or a data processor (DP) 624 (or multiple ones of them), a computer-readable memory medium embodied as a memory (MEM) 626 that stores a program of computer instructions (PROG) 628, and a suitable wireless interface, such as a RF transceiver or radio 622, for communication with the UE 10 via one or more antennas. The radio network access node 20 is coupled via a data/control path 634 to the MME 40. The path 634 may be implemented as an S1 interface. The radio network access node 20 may also be coupled to other radio network access nodes/transmit-receive points via data/control path 636, which may be implemented as an X2 interface. Or in some deployments there may be one transmit-receive point as shown in FIG. 6 as the access node 20, and multiple remote radio heads (RRHs).

The MME 40 includes a controller, such as a computer or a data processor (DP) 644 (or multiple ones of them), a computer-readable memory medium embodied as a memory (MEM) 646 that stores a program of computer instructions (PROG) 648.

At least one of the PROGs 618, 628, 648 is assumed to include program instructions that, when executed by the associated one or more DPs, enable the device to operate in accordance with exemplary embodiments of this invention. That is, various exemplary embodiments of this invention may be implemented at least in part by computer software executable by the DP 614 of the UE 10; and/or by the DP 624 of the radio network access node 20 and/or the MME 40; and/or by hardware, or by a combination of software and hardware (and firmware).

For the purposes of describing various exemplary embodiments in accordance with this invention the UE 10 and the radio network access node 20 may also include dedicated processors 615 and 625 respectively.

The computer readable MEMs 616, 626 and 646 may be of any memory device type suitable to the local technical environment and may be implemented using any suitable data storage technology, such as semiconductor based memory devices, flash memory, magnetic memory devices and systems, optical memory devices and systems, fixed memory and removable memory. The DPs 614, 624 and 644 may be of any type suitable to the local technical environment, and may include one or more of general purpose computers, special purpose computers, microprocessors, digital signal processors (DSPs) and processors based on a multicore processor architecture, as non-limiting examples. The wireless interfaces (e.g., RF transceivers 612 and 622) may be of any type suitable to the local technical environment and may be implemented using any suitable communication technology such as individual transmitters, receivers, transceivers or a combination of such components.

A computer readable medium may be a computer readable signal medium or a non-transitory computer readable storage medium/memory. A non-transitory computer readable storage medium/memory does not include propagating signals and may be, for example, but not limited to, an electronic, magnetic, optical, electromagnetic, infrared, or semiconductor system, apparatus, or device, or any suitable combination of the foregoing. Computer readable memory is non-transitory because propagating mediums such as carrier waves are memory less. More specific examples (a non-exhaustive list) of the computer readable storage medium/memory would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

The following lists some non-limiting embodiments. In an embodiment, there is provided an apparatus comprising at least one processor and at least one memory tangibly storing a computer program; wherein the at least one processor is configured with the at least one memory and the computer program to cause the apparatus to perform the method comprising steps of determining, by a user equipment, a channel condition from a current serving cell to the user equipment; and based on the determined channel condition, deciding whether to perform at least beam-specific measurements of a neighbor cell. The deciding whether to perform the at least measurements of beam-specific information of the neighbor cell comprises choosing between performing beam-agnostic measurements of the neighbor cell, and performing the at least beam-specific measurements of the neighbor cell. In an embodiment, the beam-agnostic measurements are performed when the determined channel condition is better than a predetermined threshold; and the at least beam-specific measurements are performed when the determined channel condition is worse than the predetermined threshold. In an embodiment, the deciding comprises, upon detecting that the channel condition from the current serving cell is below a predetermined threshold, performing the at least beam-specific measurements of the neighbor cell; else not performing any beam-specific measurements of the neighbor cell. In an embodiment, the apparatus may be further caused to receive at the user equipment from the current serving cell an intra-frequency threshold and/or an inter-frequency threshold, wherein determining the channel condition comprises comparing the channel condition of the current serving cell against the intra-frequency threshold if the neighbor cell is an intra-frequency neighbor cell, and/or comparing the channel condition of the current serving cell against the inter-frequency threshold if the neighbor cell is an or inter-frequency neighbor cell. In an embodiment, the deciding comprises, upon detecting that the channel condition from the serving cell is below a channel condition from the neighboring cell, performing the at least beam-specific measurements of the neighbor cell; else not performing the at least beam-specific measurements of the neighbor cell. In an embodiment, the apparatus may be further caused to request from the current serving cell configuration information that enables the user equipment to perform the at least beam-specific measurements; and receiving at the user equipment the requested configuration information. In an embodiment, the apparatus may be further caused to, upon performing the at least beam-specific measurements, measuring only a subset of all neighbour cells based on signal strengths of the respective neighbour cells. In an embodiment, the apparatus may be further caused to perform the beam-agnostic measurements during a sweep block of the current serving cell. In an embodiment, the apparatus may be further caused to receive at the user equipment from the current serving cell an intra-cell threshold; determine signal quality from a current serving sweep block of the current serving cell; and based on the determined signal quality and the intra-cell threshold, decide whether to perform at least beam-specific measurements of at least one other sweep block of the current serving cell.

In an embodiment, there is provided an apparatus comprising at least one processor and at least one memory tangibly storing a computer program; wherein the at least one processor is configured with the at least one memory and the computer program to cause the apparatus to perform the method comprising steps of configuring, by a network node of a serving cell, a user equipment with neighbor cell measurement parameters, said parameters being for use in deciding whether the user equipment is to perform at least beam-specific measurements of a neighbor cell; and receiving from the user equipment at least one measurement report with one or more beam-specific measurements of the neighbor cell. In an embodiment the parameters are for use by the user equipment in deciding between: performing beam-agnostic measurements of the neighbor cell, and performing the at least beam-specific measurements of the neighbor cell. In an embodiment, the parameters comprise a threshold and the deciding comprises whether to perform beam-agnostic measurements or the at least beam-specific measurements of the neighbor cell is at least partly based on the threshold. In an embodiment, the apparatus may be further caused to provide configuration information that enables the user equipment to perform the at least beam-specific measurements. In an embodiment, the apparatus may be further caused to configure a neighbour cell to schedule user equipment specific reference signals useable by the user equipment in the serving cell for performing the at least beam-specific measurements of the neighbor cell.

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment.

A communications system and/or a network node/base station may comprise a network node or other network elements implemented as a server, host or node operationally coupled to a remote radio head. At least some core functions may be carried out as software run in a server (which could be in the cloud) and implemented with network node functionalities in a similar fashion as much as possible (taking latency restrictions into consideration). This is called network virtualization. "Distribution of work" may be based on a division of operations to those which can be run in the cloud, and those which have to be run in the proximity for the sake of latency requirements. In macro cell/small cell networks, the "distribution of work" may also differ between a macro cell node and small cell nodes. Network virtualization may comprise the process of combining hardware and software network resources and network functionality into a single, software-based administrative entity, a virtual network. Network virtualization may involve platform virtualization, often combined with resource virtualization. Network virtualization may be categorized as either external, combining many networks, or parts of networks, into a virtual unit, or internal, providing network-like functionality to the software containers on a single system.

Below are some acronyms used herein:
- BA: Beam Agnostic
- BRS: Beam Reference Signal
- DL: Downlink
- DM-RS: Demodulation Reference Signal
- MRS: Mobility Reference Signal
- MME: Mobility Management Entity
- m-MIMO: Massive Multiple-Input Multiple Output
- mmWave: Millimeter wave
- NR: New Radio
- OFDM: Orthogonal Frequency Division Multiplex
- PBCH: Physical Broadcast CHannel
- PCI: Physical Cell Identifier
- RACH: Random Access CHannel
- RSRP: Reference signal received power
- RX: Receiver
- SYNC: Synchronization Signal or SS
- TRP: Transmission-Reception point
- TX: Transmitter
- UE: User Equipment
- uGW: user-plane gateway
- UL: Uplink

## Claims

1. An apparatus for a user equipment (10), comprising:
means for determining (502) a channel condition from a current serving cell to the user equipment (10);
means for receiving configuration information from a network node (20) of the current serving cell, the configuration information indicating a first predetermined threshold;
means for deciding (504), based on the determined channel condition and the received configuration, whether to perform beam-agnostic measurements of the neighbor cell and/or beam-specific measurements of the neighbor cell, wherein:
• the beam-agnostic measurements are performed at least when the determined channel condition is better than the first predetermined threshold, wherein the beam-agnostic measurements comprise measuring beam-agnostic signaling,
• the beam-specific measurements are performed when the determined channel condition is worse than the first predetermined threshold and are not performed when the determined channel condition is better than the first predetermined threshold, wherein the beam-specific measurements comprise measuring beam-specific signaling.

2. The apparatus according to claim 1, wherein the beam-agnostic signaling comprises at least one of the following: a synchronization signal, a broadcast channel demodulation reference signal, a master information block or a system information block.

3. The apparatus according to any of claims 1 to 2, wherein the beam-specific signaling comprises at least one of the following: a random access channel message, a beam reference signal, a mobility reference signal or a channel state information reference signal.

4. The apparatus according to any of claims 1-3, further comprising:
means for receiving, as the first predetermined threshold at the user equipment (10) from the current serving cell, an intra-frequency threshold and/or an inter-frequency threshold, wherein determining the channel condition comprises:
• comparing the channel condition of the current serving cell against the intra-frequency threshold if the neighbor cell is an intra-frequency neighbor cell;
• and/or comparing the channel condition of the current serving cell against the inter-frequency threshold if the neighbor cell is an or inter-frequency neighbor cell.

5. The apparatus according to any of claims 1-4, wherein the deciding comprises:
• upon detecting that the channel condition from the serving cell is below a channel condition from the neighboring cell, performing the beam-specific measurements of the neighbor cell;
else
• not performing the beam-specific measurements of the neighbor cell.

6. The apparatus according to any of claims 1-5, further comprising:
means for requesting, from the current serving cell, configuration information that enables the user equipment (10) to perform the beam-specific measurements; and
means for receiving, at the user equipment (10), the requested configuration information.

7. The apparatus according to any of claims 1-6, further comprising:
means for measuring only a subset of all neighbour cells based on signal strengths of the respective neighbour cells, upon performing the beam-specific measurements.

8. The apparatus according to any of claims 1-7, further comprising:
means for performing the beam-agnostic measurements during a sweep block of the current serving cell.

9. The apparatus according to any of claims 1-8, further comprising:
means for receiving from the current serving cell, an intra-cell threshold as the first predetermined threshold;
means for determining signal quality from a current serving sweep block of the current serving cell; and
means for deciding, based on the determined signal quality and the intra-cell threshold, whether to perform the beam-specific measurements of at least one other sweep block of the current serving cell.

10. The apparatus according to any of claims 1-8, wherein the deciding comprises:
• no measurements of the neighbor cell are performed when the determined channel condition of the current serving cell is better than a second predetermined threshold, wherein the second predetermined threshold corresponds to a signal level indicated by the S-measure parameter;
• the beam-agnostic measurements are performed when the determined channel condition is better than the first predetermined threshold but worse than the second predetermined threshold;
• the beam-specific measurements are performed when the determined channel condition is worse than the first predetermined threshold.

11. The apparatus of any of claims 1-10, wherein the first predetermined threshold has an offset compared to a signal level indicated by the S-measure parameter.

12. A method performed by a user equipment (10), comprising:
determining (502) a channel condition from a current serving cell to the user equipment (10);
receiving a configuration information from a network node (20) of the current serving cell, the configuration information indicating a first predetermined threshold; and
deciding (504), based on the determined channel condition and the received configuration, whether to perform beam-agnostic measurements of the neighbor cell and/or beam-specific measurements of the neighbor cell, wherein:
• the beam-agnostic measurements are performed at least when the determined channel condition is better than the first predetermined threshold, wherein the beam-agnostic measurements comprise measuring beam-agnostic signaling,
• the beam-specific measurements are performed when the determined channel condition is worse than the first predetermined threshold and are not performed when the determined channel condition is better than the first predetermined threshold, wherein the beam-specific measurements comprise measuring beam-specific signaling.

13. A computer readable memory tangibly storing a computer program that when executed by an user equipment causes the user equipment to perform the method according to claim 12.

## Patentansprüche

1. Vorrichtung für eine Teilnehmereinrichtung (10), die Folgendes umfasst:
Mittel zum Bestimmen (502) eines Kanalzustands von einer aktuellen bedienenden Zelle zu einer Teilnehmereinrichtung (10);
Mittel zum Empfangen von Auslegungsinformationen von einem Netzwerkknoten (20) der aktuellen bedienenden Zelle, wobei die Auslegungsinformationen einen ersten vorbestimmten Schwellwert anzeigen;
Mittel zum Beschließen (504) auf Basis des bestimmten Kanalzustands und der empfangenen Auslegung, ob strahlunabhängige Messungen der Nachbarzelle und/oder strahlspezifische Messungen der Nachbarzelle durchgeführt werden sollen, wobei:
• die strahlunabhängigen Messungen mindestens durchgeführt werden, wenn der bestimmte Kanalzustand besser ist als der erste vorbestimmte Schwellwert, wobei die strahlunabhängigen Messungen eine Messung einer strahlunabhängigen Signalisierung umfassen,
• die strahlspezifischen Messungen durchgeführt werden, wenn der bestimmte Kanalzustand schlechter ist als der erste vorbestimmte Schwellwert, und nicht durchgeführt werden, wenn der bestimmte Kanalzustand besser ist als der erste vorbestimmte Schwellwert, wobei die strahlspezifischen Messungen eine Messung einer strahlspezifischen Signalisierung umfassen.

2. Vorrichtung nach Anspruch 1, wobei die strahlunabhängige Signalisierung mindestens eines von Folgendem umfasst: ein Synchronisationssignal, ein Broadcastkanaldemodulationsreferenzsignal, einen Masterinformationsblock oder einen Systeminformationsblock.

3. Vorrichtung nach einem der Ansprüche 1 bis 2, wobei die strahlspezifische Signalisierung mindestens eines von Folgendem umfasst: eine Direktzugriffskanalnachricht, ein Strahlreferenzsignal, ein Mobilitätsreferenzsignal oder ein Kanalstatusinformationsreferenzsignal.

4. Vorrichtung nach einem der Ansprüche 1-3, die ferner Folgendes umfasst:
Mittel zum Empfangen eines Intrafrequenzschwellwerts und/oder eines Interfrequenzschwellwerts als den ersten vorbestimmten Schwellwert an der Teilnehmereinrichtung (10) von der aktuellen bedienenden Zelle, wobei das Bestimmen des Kanalzustands Folgendes umfasst:
• Vergleichen des Kanalzustands der aktuellen bedienenden Zelle mit dem Intrafrequenzschwellwert, wenn die Nachbarzelle eine Intrafrequenznachbarzelle ist;
• und/oder Vergleichen des Kanalzustands der aktuellen bedienenden Zelle mit dem Interfrequenzschwellwert, wenn die Nachbarzelle eine Interfrequenznachbarzelle ist.

5. Vorrichtung nach einem der Ansprüche 1-4, wobei das Beschließen Folgendes umfasst:
• nach Detektieren, dass der Kanalzustand von der bedienenden Zelle unter einem Kanalzustand von der Nachbarzelle liegt, Durchführen der strahlspezifischen Messungen der Nachbarzelle;
andernfalls
• kein Durchführen der strahlspezifischen Messungen der Nachbarzelle.

6. Vorrichtung nach einem der Ansprüche 1-5, die ferner Folgendes umfasst:
Mittel zum Anfordern von Auslegungsinformationen, die es der Teilnehmereinrichtung (10) erlauben, die strahlspezifischen Messungen durchzuführen, von der aktuellen bedienenden Zelle; und
Mittel zum Empfangen der angeforderten Auslegungsinformationen an der Teilnehmereinrichtung (10).

7. Vorrichtung nach einem der Ansprüche 1-6, die ferner Folgendes umfasst:
Mittel zum Messen nur eines Untersatzes von allen Nachbarzellen auf Basis einer Signalstärke der jeweiligen Nachbarzellen nach Durchführen der strahlspezifischen Messungen.

8. Vorrichtung nach einem der Ansprüche 1-7, die ferner Folgendes umfasst:
Mittel zum Durchführen der strahlunabhängigen Messungen während eines Sweepblocks der aktuellen bedienenden Zelle.

9. Vorrichtung nach einem der Ansprüche 1-8, die ferner Folgendes umfasst:
Mittel zum Empfangen eines Intrazellenschwellwerts als den ersten vorbestimmten Schwellwert von der aktuellen bedienenden Zelle;
Mittel zum Bestimmen einer Signalqualität von einem aktuellen bedienenden Sweepblock der aktuellen bedienenden Zelle; und
Mittel zum Beschließen auf Basis der bestimmten Signalqualität und des Intrazellenschwellwerts, ob die strahlspezifischen Messungen von mindestens einem weiteren Sweepblock der aktuellen bedienenden Zelle durchgeführt werden sollen.

10. Vorrichtung nach einem der Ansprüche 1-8, wobei das Beschließen Folgendes umfasst:
• es werden keine Messungen der Nachbarzelle durchgeführt, wenn der bestimmte Kanalzustand der aktuellen bedienenden Zelle besser ist als ein zweiter vorbestimmter Schwellwert, wobei der zweite vorbestimmte Schwellwert einem Signalpegel entspricht, der vom S-Messparameter angezeigt wird;
• die strahlunabhängigen Messungen werden durchgeführt, wenn der bestimmte Kanalzustand besser ist als der erste vorbestimmte Schwellwert, aber schlechter als der zweite vorbestimmte Schwellwert;
• die strahlspezifischen Messungen werden durchgeführt, wenn der bestimmte Kanalzustand schlechter ist als der erste vorbestimmte Schwellwert.

11. Vorrichtung nach einem der Ansprüche 1-10, wobei der erste vorbestimmte Schwellwert, verglichen mit einem Signalpegel, der vom S-Messparameter angezeigt wird, einen Versatz aufweist.

12. Verfahren, das von einer Teilnehmereinrichtung (10) durchgeführt wird und Folgendes umfasst:
Bestimmen (502) eines Kanalzustands von einer aktuellen bedienenden Zelle zu einer Teilnehmereinrichtung (10);
Empfangen von Auslegungsinformationen von einem Netzwerkknoten (20) der aktuellen bedienenden Zelle, wobei die Auslegungsinformationen einen ersten vorbestimmten Schwellwert anzeigen; und
Beschließen (504) auf Basis des bestimmten Kanalzustands und der empfangenen Auslegung, ob strahlunabhängige Messungen der Nachbarzelle und/oder strahlspezifische Messungen der Nachbarzelle durchgeführt werden sollen, wobei:
• die strahlunabhängigen Messungen mindestens durchgeführt werden, wenn der bestimmte Kanalzustand besser ist als der erste vorbestimmte Schwellwert, wobei die strahlunabhängigen Messungen eine Messung einer strahlunabhängigen Signalisierung umfassen,
• die strahlspezifischen Messungen durchgeführt werden, wenn der bestimmte Kanalzustand schlechter ist als der erste vorbestimmte Schwellwert, und nicht durchgeführt werden, wenn der bestimmte Kanalzustand besser ist als der erste vorbestimmte Schwellwert, wobei die strahlspezifischen Messungen eine Messung einer strahlspezifischen Signalisierung umfassen.

13. Computerlesbarer Speicher, auf dem greifbar ein Computerprogramm gespeichert ist, das, wenn es von einer Teilnehmereinrichtung ausgeführt wird, die Teilnehmereinrichtung veranlasst, das Verfahren nach Anspruch 12 durchzuführen.

## Revendications

1. Appareil pour un équipement utilisateur (10), comprenant :
des moyens pour déterminer (502) une condition de canal entre une cellule de desserte actuelle et l'équipement utilisateur (10) ;
des moyens pour recevoir des informations de configuration d'un noeud de réseau (20) de la cellule de desserte actuelle, les informations de configuration indiquant un premier seuil prédéterminé ;
des moyens pour décider (504), sur la base de la condition de canal déterminée et de la configuration reçue, s'il faut effectuer des mesures de diagnostic de faisceau de la cellule voisine et/ou des mesures spécifiques au faisceau de la cellule voisine, dans lequel :
• les mesures de diagnostic de faisceau sont effectuées au moins lorsque la condition de canal déterminée est meilleure que le premier seuil prédéterminé, dans lequel les mesures de diagnostic de faisceau comprennent la mesure d'une signalisation de diagnostic de faisceau,
• les mesures spécifiques au faisceau sont effectuées lorsque la condition de canal déterminée est plus mauvaise que le premier seuil prédéterminé, et ne sont pas effectuées lorsque la condition de canal déterminée est meilleure que le premier seuil prédéterminé, dans lequel les mesures spécifiques au faisceau comprennent la mesure d'une signalisation spécifique au faisceau.

2. Appareil selon la revendication 1, dans lequel la signalisation de diagnostic de faisceau comprend au moins l'un des éléments suivants : un signal de synchronisation, un signal de référence de démodulation de canal de diffusion, un bloc d'information principal ou un bloc d'information système.

3. Appareil selon l'une des revendications 1 et 2, dans lequel la signalisation spécifique au faisceau comprend au moins l'un des éléments suivants : un message de canal d'accès aléatoire, un signal de référence de faisceau, un signal de référence de mobilité ou un signal de référence d'informations d'état du canal.

4. Appareil selon l'une des revendications 1 à 3, comprenant en outre :
des moyens pour recevoir de la cellule de desserte actuelle, comme premier seuil prédéterminé, au niveau de l'équipement utilisateur (10), un seuil intra-fréquence et/ou un seuil inter-fréquence, dans lequel la détermination de la condition de canal comprend :
• la comparaison de la condition de canal de la cellule de desserte actuelle au seuil intra-fréquence si la cellule voisine est une cellule voisine intra-fréquence ;
• et/ou la comparaison de la condition de canal de la cellule de desserte actuelle au seuil inter-fréquence si la cellule voisine est une cellule voisine inter-fréquence.

5. Appareil selon l'une des revendications 1 à 4, dans lequel la décision comprend ce qui suit :
• en détectant que la condition de canal de la cellule de desserte est en dessous d'une condition de canal de la cellule voisine, effectuer des mesures spécifiques au faisceau de la cellule voisine ;
sinon
• ne pas effectuer de mesures spécifiques au faisceau de la cellule voisine.

6. Appareil selon l'une des revendications 1 à 5, comprenant en outre :
des moyens pour demander à la cellule de desserte actuelle des informations de configuration qui permettent à l'équipement utilisateur (10) d'effectuer les mesures spécifiques au faisceau ; et
des moyens pour recevoir, au niveau de l'équipement utilisateur (10), les informations de configuration demandées.

7. Appareil selon l'une des revendications 1 à 6, comprenant en outre :
des moyens pour mesurer uniquement un sous-ensemble de toutes les cellules voisines sur la base des intensités de signal des cellules voisines respectives, en effectuant les mesures spécifiques de faisceaux.

8. Appareil selon l'une des revendications 1 à 7, comprenant en outre :
des moyens pour effectuer les mesures de diagnostic de faisceau dans un bloc de balayage de la cellule de desserte actuelle.

9. Appareil selon l'une des revendications 1 à 8, comprenant en outre :
des moyens pour recevoir de la cellule de desserte actuelle un seuil intracellulaire comme premier seuil prédéterminé ;
des moyens pour déterminer une qualité de signal à partir d'un bloc de balayage de desserte actuel de la cellule de desserte actuelle ; et
des moyens pour décider, sur la base de la qualité de signal déterminée et du seuil intracellulaire, s'il faut effectuer les mesures spécifiques au faisceau d'au moins un autre bloc de balayage de la cellule de desserte actuelle.

10. Appareil selon l'une des revendications 1 à 8, dans lequel la décision comprend ce qui suit :
• aucune mesure de la cellule voisine n'est effectuée lorsque la condition de canal déterminée de la cellule de desserte actuelle est meilleure qu'un deuxième seuil prédéterminé, dans lequel le deuxième seuil prédéterminé correspond à un niveau de signal indiqué par le paramètre de mesure S ;
• les mesures de diagnostic de faisceau sont effectuées lorsque la condition de canal déterminée est meilleure que le premier seuil prédéterminé mais plus mauvaise que le deuxième seuil prédéterminé ;
• les mesures spécifiques au faisceau sont effectuées lorsque la condition de canal déterminée est plus mauvaise que le premier seuil prédéterminé.

11. Appareil selon l'une des revendications 1 à 10, dans lequel le premier seuil prédéterminé présente un décalage par rapport à un niveau de signal indiqué par le paramètre de mesure S.

12. Procédé effectué par un équipement utilisateur (10), comprenant
la détermination (502) d'une condition de canal entre une cellule de desserte actuelle et l'équipement utilisateur (10) ;
la réception d'informations de configuration d'un noeud de réseau (20) de la cellule de desserte actuelle, les informations de configuration indiquant un premier seuil prédéterminé ; et
la décision (504), sur la base de la condition de canal déterminée et de la configuration reçue, quant à s'il faut effectuer des mesures de diagnostic de faisceau de la cellule voisine et/ou des mesures spécifiques au faisceau de la cellule voisine, dans lequel :
• les mesures de diagnostic de faisceau sont effectuées au moins lorsque la condition de canal déterminée est meilleure que le premier seuil prédéterminé, dans lequel les mesures de diagnostic de faisceau comprennent la mesure d'une signalisation de diagnostic de faisceau,
• les mesures spécifiques au faisceau sont effectuées lorsque la condition de canal déterminée est plus mauvaise que le premier seuil prédéterminé, et ne sont pas effectuées lorsque la condition de canal déterminée est meilleure que le premier seuil prédéterminé, dans lequel les mesures spécifiques au faisceau comprennent la mesure d'une signalisation spécifique au faisceau.

13. Mémoire lisible par ordinateur stockant de manière tangible un programme informatique qui, lorsqu'il est exécuté par un équipement utilisateur, amène l'équipement utilisateur à effectuer le procédé selon la revendication 12.
